Europäisches Patentamt

European Patent Office

Office européen des brevets

(11) Publication number: **0 294 147**
**A1**

# EUROPEAN PATENT APPLICATION

(21) Application number: 88304941.3

(22) Date of filing: 31.05.88

(51) Int. Cl.4: **A23N 12/10 , F26B 7/00**

(30) Priority: 01.06.87 US 56417

(43) Date of publication of application:
07.12.88 Bulletin 88/49

(84) Designated Contracting States:
AT BE CH DE ES FR GB GR IT LI LU NL SE

(71) Applicant: **RICKEL, INC.**
**4800 Main Street Suite 430**
**Kansas City Missouri 64112(US)**

(72) Inventor: **Long, David H.**
**4800 Old Springfield Road**
**Springfield Ohio 45502(US)**

(74) Representative: **Jackson, Peter Arthur et al**
**GILL JENNINGS & EVERY 53-64 Chancery**
**Lane**
**London WC2A 1HN(GB)**

(54) Grain roasting apparatus and method.

(57) Apparatus and method are provided for roasting of grain such as soybeans and corn intended for feeding of livestock. The apparatus includes a roasting chamber (10) coupled with a hot air-type heat generator (11) for inducing a flow of high temperature air into and through the roasting chamber. Positioned in the chamber is an elongated rotor (12) that is revolved about a horizontal axis (30) and which rotor is provided with a plurality of elongated planar blades (32) extending axially of the rotor and disposed in angularly spaced, radially outwardly projecting relationship. The blades are formed from a plurality of relatively small diameter rods (105) that are spaced a distance apart to permit air flow between rods, but form a surface for support of the grain. Grain conveying augers (36, 47) are provided to introduce grain at the top of the apparatus to deposit grain onto rotor blades revolving in an upward direction and to remove grain from the bottom of the chamber after it is roasted and discharged from the rotor. Roasting of the grain is accomplished by supporting the grain on a heated surface that transfers heat to the grain and by concurrently agitating the grain by causing the grain to roll over the supporting blade surfaces and continually changing the portion of the grain in direct contact with the blade surface.

FIG.11

## Grain Roasting Apparatus and Method

This invention relates generally to apparatus and method for processing of grains such as soybeans and corn for feeding of cattle and hogs. This invention relates more particularly to apparatus and method for effecting controlled movement of the grain to obtain uniform heating of the grain to a predetermined elevated temperature and achieving processing of the grain by a continuous operation.

It is well-known that in feeding of cattle and hogs for obtaining of meat for human consumption that roasting of feed grains such as soybeans and corn provides some very substantial and significant benefits. Feed grains such as soybeans have for some time been processed by a technique which produces soybean meal that is usable and is particularly desirably as a feed grain. One of the problems with using raw soybeans as a feed grain is that they contain a substantial amount of fat in a raw state that is difficult for the animals to digest. Use of raw soybeans thus is inefficient from the stand point of meat production as a large percentage of nutrient is simply wasted. Soybeans also contain toxic enzymes such as urea and lipoxidase that greatly inhibit growth and further contributes to a reduction in efficiency.

Full fat roasted soybeans allow you to use one of nature's most natural sources of nutrition consisting of high levels of quality protein, vegetable oils that are high in energy, minerals and vitamins.

Experiments with hogs have shown roasted beans resulted in 10% better gains with 14% less total feed. This result is attributed to the higher level of energy in the full fat roasted bean. The full fat bean consists of 18% fat versus 1.5% to 2.1% in soybean meal. When you consider that one (1) pound of fat is equal to approximately 2.25 pounds of energy from corn, you can understand why 5% fat is recommended in growing or finishing diets. Adding fat to the sow's diet has resulted in higher numbers of live pigs born per litter, stronger pigs, an increase in back fat on pigs at birth from which they draw during the first few hours after birth, and heavier weaning weight.

The diets are greatly improved by using the full fat roasted soybean that is rich in unsaturated fats rather than less digestible saturated fats. Roasting gelatinized the grain making it more readily digestible by all types of livestock. Advantages of full fat roasted soybeans in livestock diets is summarized as follows:

DAIRY

    (a) increased milk production on less feed;

    (b) increase in butter fat; and

    (c) better herd health, appearance, healthier calves and less veterinary expense.

HOGS

    (a) faster starts;

    (b) faster gains on less feed;

    (c) healthier hogs, and

    (d) better yield and grade.

The beneficial effect of roasting corn for finishing beef cattle is summarized as follows:

    1. 10% less feed per pound of gain;

    2. 6% to 10% faster gain, and

    3. about 1/2 grade improvement in carcass quality.

Apparatus and operating techniques have been devised for processing of grain in attempting to achieve the general objectives as outlined in the preceding paragraphs. One such apparatus which has been developed to effect roasting of grain comprises an elongated drum or cylinder through which a stream of heated air is caused to flow in an axial direction along with the transmission of the grain being roasted. The cylinder is supported for revolution about its longitudinal axis and is supported to be slightly inclined such that the inclination will effect the longitudinal movement of the grain through the cylinder. Heated air is developed by a liquid or gaseous fuel-fired burner provided with a blower for causing the heated air to flow axially through the drum. Disposed around the interior of the drum are longitudinally extended vanes or blades which function to transport the grain from the bottom regions of the drum to the top where the grain is then discharged and drops in a generally vertical direction to the bottom of the drum. Ideally, the grain is advanced a predetermined distance for each elevation and drop, although, as a practical matter, this is not the case. During this gravity fall, the grain passes through the heated air stream and also through the actual flame developed from the burner. This apparatus has not been found to be fully satisfactory for roasting of the grain. In particular, the apparatus does not provide uniform roasting for all of the grain particles in that the weight of the particles has substantial effect on the extent of roasting. Light grain particles tend to be blown through or rapidly transported through the drum and are not sufficiently roasted.

Heavier particles tend to remain in the drum for a longer period of time and thus they tend to become roasted to an excessive degree. Because of the nature of operation of the evolving drum apparatus, there is not control whatsoever as to the time that the grain will remain within the drum for purposes of roasting.

An improved apparatus is provided for roasting of grain to be utilized in feeding of livestock. A method of roasting is also provided and which is employed by the apparatus resulting in obtaining grain of uniformly roasted degree and of the same quality. The apparatus and method enable the roasting process to be completed with accurate control over the time during which the grains are subjected to the heating or roasting operation.

The apparatus of this invention comprises a heating chamber and a rotor positioned in the chamber for support of the grain in a heating zone for a predetermined time while it is being roasted. The rotor includes a plurality of planar blades which are secured to a horizontal supporting axle and which revolve about a horizontal axis in the path of the flame from the heat generating burner and the heated air that is caused to flow through the chamber. Each of the blades is formed from a number of rods that are spaced a predetermined distance apart along the axle and extend a predetermined distance radially outward from the supporting axle. Grain is deposited onto the blades in a continuous flow and as the blades revolve, the grain is enabled to roll on the blades and this results in the grain being turned with reference to the surfaces that are either in contact with the supporting rods or the flame and air that are directed against the rotor. The rods forming the blades of the rotor are fabricated from steel and retain heat with that heat being transmitted to the grain that is supported on the rods.

The blades are angularly spaced about the rotor and adjacent pairs form pockets for initially receiving the grain that is deposited by gravity onto the rotor. Thus, the grain is initially retained at the juncture of the adjacent pairs of blades and, upon further revolution of the rotor, the grain will be caused to move along the surfaces of the blades. This results in movement of the grain and changing the surfaces of the grains that are in direct contact to reduce the likelihood of burning of the grain. This continual movement of the grain on the rotor is further enhanced by providing each of the blades with an auxiliary blade element which forms a second or secondary pocket for initially receiving the grain. As with the primary rotor blades these auxiliary blades also produce movement of the grain along the surfaces of the blade to improve the heat transfer with the beneficial result being that the grain in first caused to move along the surface at one side of a blade during a part of its revolution and for the grain to then move along the opposite surface of that same blade during subsequent portions of rotation. At the conclusion of the operating time for the grain associated with a specific blade, that grain is then discharged from the blade and collected at the bottom of the heating chamber for removal and subsequent processing operations.

The rotor is revolved at a predetermined velocity and thereby directly controls the time that the grain is maintained within the roasting environment in a very precise and readily controllable manner. Through precise control of the burner or heat generating device, the temperature to which the grain is elevated can be carefully controlled and in conjunction with the time element control, the roasting operation will uniformly roast the grain that is processed by the apparatus and in accordance with the method of this invention.

These and other objects and advantages of the apparatus and method provided by this invention will become readily apparent from the following detailed description of an illustrative embodiment of the apparatus and the accompanying drawings.

Figure 1 is a side elevational view of a GRAIN ROASTING APPARATUS embodying my invention with portions thereof broken away for clarity of illustration.

Figure 2 is a front elevational view thereof.

Figure 3 is a rear elevational view thereof.

Figure 4 is a fragmentary top plan view thereof with portions broken away for clarity of illustration.

Figure 5 is a fragmentary sectional view of an enlarged scale taken along line 5-5 of Figure 4.

Figure 6 is a fragmentary sectional view on an enlarged scale taken along line 6-6 of Figure 1.

Figure 7 is a fragmentary sectional view on an enlarged scale of the lower portion of the apparatus taken along line 7-7 of Figure 4.

Figure 8 is a fragmentary sectional view on a substantially enlarged scale of a portion of the rotor taken along line 8-8 of Figure 7.

Figure 9 is a sectional view taken along line 9-9 of Figure 8.

Figure 10 is a sectional view taken along line 10-10 of Figure 8, but revolved 90 degrees to a substantially horizontal position.

Figure 11 is a diagrammatic sectional view taken along line 11-11 of Figure 4.

Figure 12 is a diagrammatic sectional view similar to that of Figure 11, but showing a modified GRAIN ROASTING APPARATUS having two rotors disposed in serial relationship for controlling the flow of grain through the apparatus.

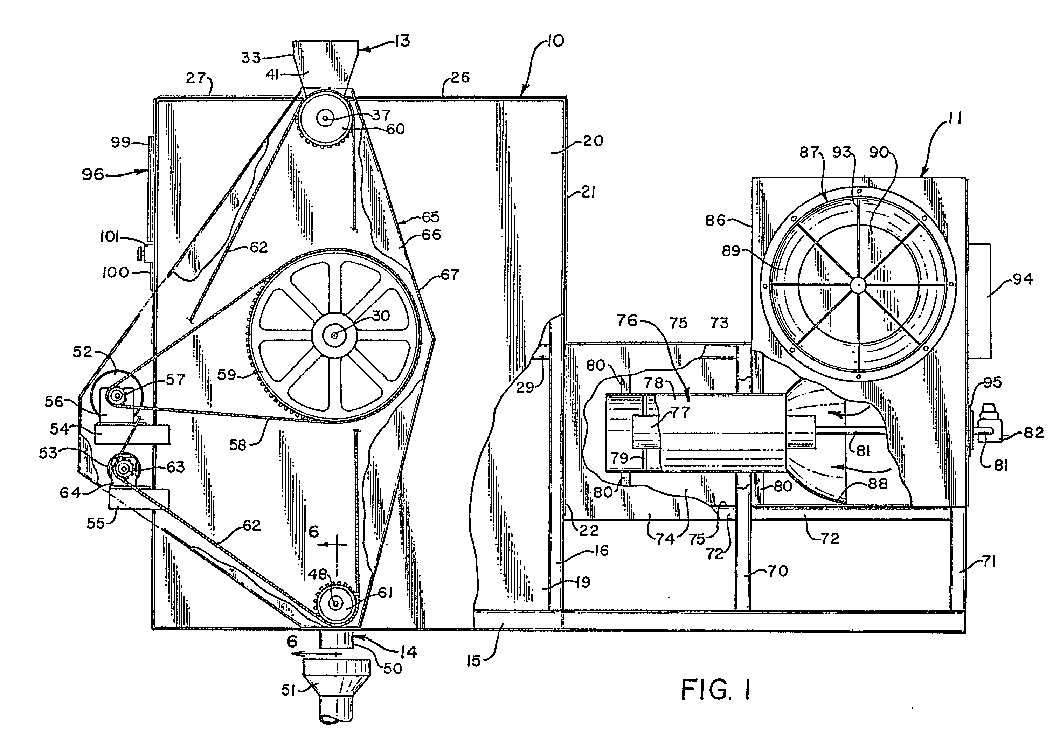

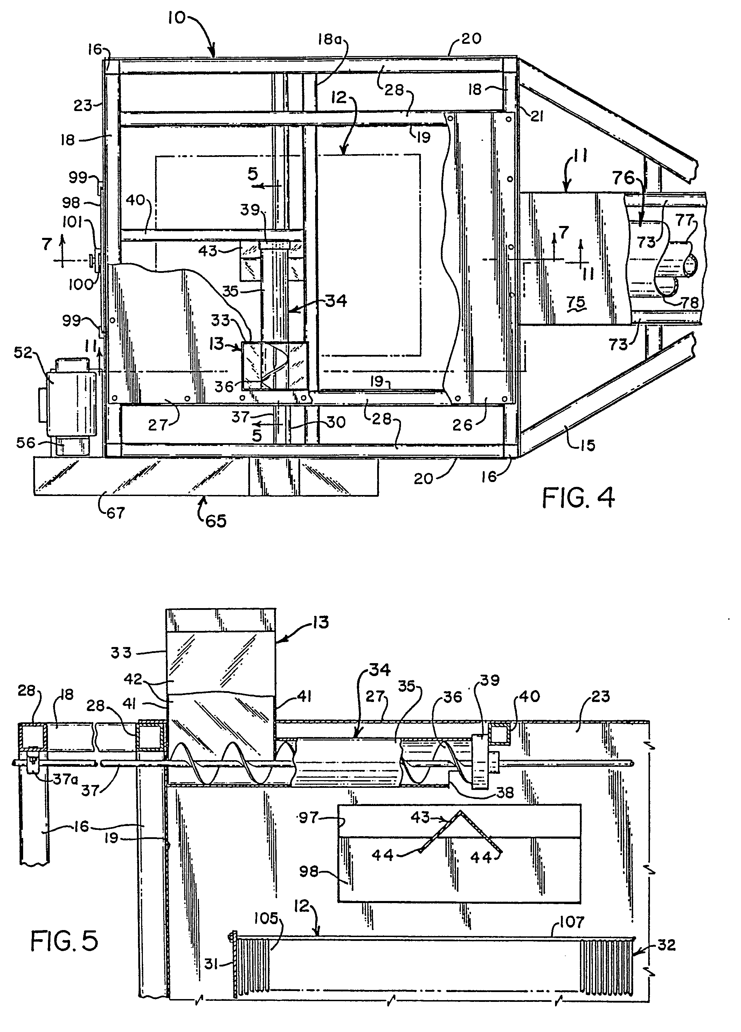

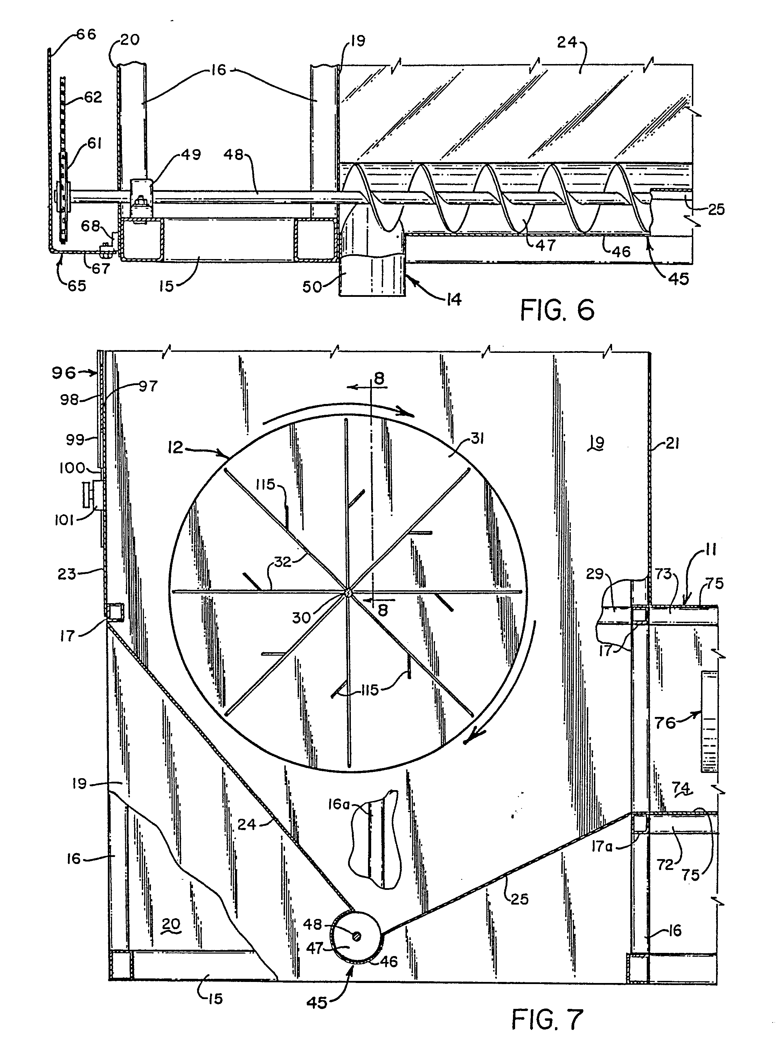

Referring to the several figures of the drawings, an exemplary embodiment of the apparatus for effecting roasting of grain in accordance with the method of the invention is illustrated in detail. The apparatus, in general, comprises the two basic components of a roasting chamber 10 and an associated heat generator 11. These two units are disposed in association as can be best seen in Figures 1 and 4 such that the heat generator will effect a flow of heated air as well as actual flame into the interior of the roasting chamber. In general, the roasting chamber is provided with a rotor 12 which can be best seen in Figures 4 and 7 and is also provided with a grain inlet 13 and a grain removal or discharge 14. Other auxiliary components associated with the mechanism for automated introduction of grain into the roasting chamber or its subsequent removal for further processing are not shown in the drawings. However, as is readily understood by those skilled in this particular art, appropriate grain transport mechanisms would be provided for moving grain from either an overhead storage such as by gravity into the grain inlet or through use of elevating mechanisms such as auger-type devices. Similarly, the grain discharge 14 would permit gravity flow of the roasted grain from the roasting chamber 10 into other auxiliary grain transporting mechanisms and apparatus such as augers or conveyor belts. The drawings again do not illustrate such auxiliary components as their specific constructions and operation do not form a part of this invention nor do any subsequent grain processing operations and such mechanisms and apparatus are known to those skilled in this art.

The roasting chamber 10, from a structural standpoint, comprises a generally cubically-shaped structure having sheet metal panels secured to a structural frame formed from tubular members of square cross-section that are welded together to assembled relationship. Included in the structural frame is a base frame 15 upon which upright tubular structural members 16 and 16a are positioned. Other structural members also of a tubular construction such as 17 and 18 are disposed in transversely extending relationship between the longitudinal side walls of the chamber at an intermediate position and at the top of the structure. It will be noted that the longitudinal sides of the roasting chamber are of the double wall construction which is designed to better accommodate the relatively high temperatures that are developed in the operation of the apparatus as will be subsequently described and as can be seen in the drawings to provide mechanical support for the various operating components, but which do not have supporting bearings for those components mounted in direct association with the chamber components wherein the high temperatures are developed. The dual walls of the sides of the chamber are constructed in substantially the same manner with a sheet metal panel 19 secured to the inwardly facing side of the frame of the interior wall and a sheet metal panel 20 being secured to the outwardly facing side of the outer wall frame. From a dimensional standpoint, the illustrative embodiment has a basic roasting section having a transverse width of the order of four feet and each of the two outer side walls being spaced approximately one foot outwardly with respect to the inner wall. This provides sufficient insulating space to avoid having excessively high temperatures developed on its exterior walls which provide the support for the operating mechanisms.

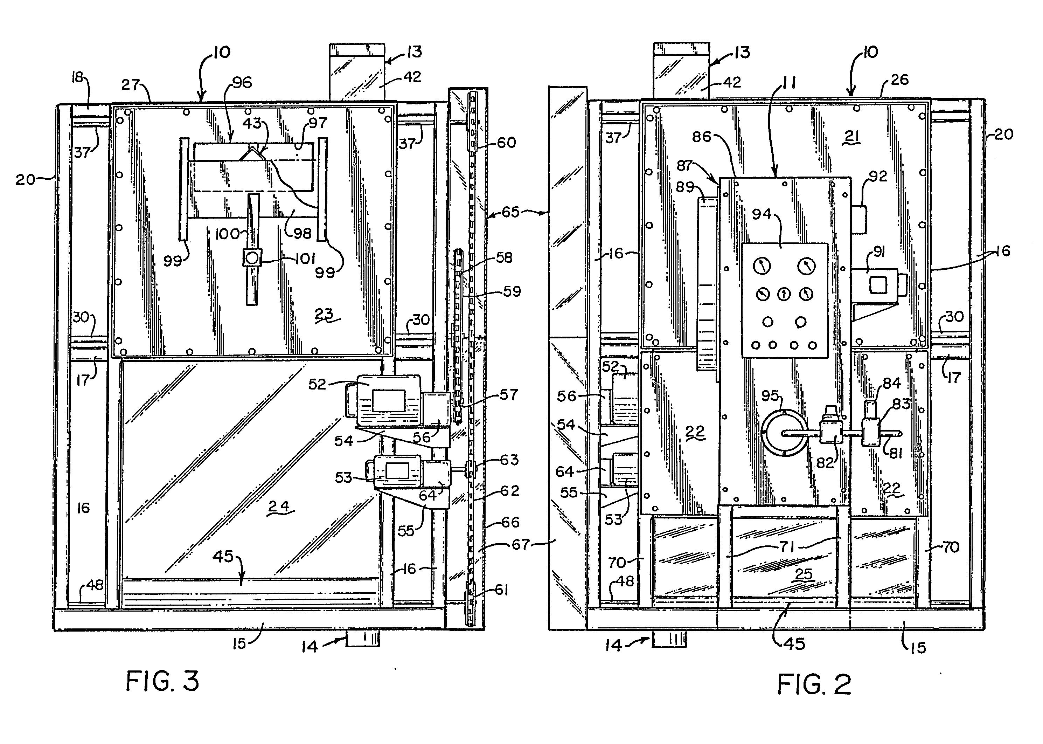

Referring to Figure 2, it will be seen that the front of the chamber is closed by an upper sheet metal panel 21 and two lower panels 22 which flank the opposite sides of the heat generator 11 at its point of interconnection with the roasting chamber. These panels 21 and 22 may be advantageously secured to the structural frame by fastening means to permit their removal for purposes of maintenance of the apparatus. The rear of the roasting chamber is also provided with a sheet metal panel 23 at the upper portion and it also is advantageously secured to the structural frame by fastening means to permit its removal for maintenance purposes. The lower part of the rear wall is closed by a panel 24 which is inclined inwardly and downwardly from a midpoint elevation to the general center of the chamber as can be best seen in Figure 7. This panel is welded to the structural frame member 17 and sheet metal panel 19 as well as other components as will be subsequently described. A forward lower portion of the chamber is also provided with a panel 25 which is disposed in a downwardly and rearwardly inclined position. The two inclined panels 24 and 25, in effect, form a bottom wall of the chamber and which cooperate with the grain discharge 14.

The top of the chamber is closed by a pair of sheet metal panels 26 and 27 with each panel covering approximately one half of the top area. These panels are secured to the structural frame by fastening means to permit their removal for access to and maintenance of internal components.

Longitudinal frame members 28 extend across the top of the structural frame as can be seen in Figure 4 for each of the side walls and a longitudinal frame member 29 extends at an intermediate point of the side walls in alignment with the transverse member 17. Each of the side walls, both inner and outer, are also provided with a central vertical structure member 16 a as can be seen in Figure 7. A centrally located transverse member 18a is provided at the top of the structure as shown in Figure 4.

Disposed substantially centrally within the roasting chamber 10 is the rotor 12 which performs the function of supporting the grain during the time that it is retained within the chamber for effecting roasting. This rotor which is of an elongated configuration is mounted on a central axle 30 that extends transversely across the chamber. The axle 30 is journalled in bearings not shown that are mounted on each of the respective longitudinal frame members 29 that are located in the outer longitudinal walls. Secured on the axle 30 in axially spaced relationship are two circular end plates 31 which are of the order of four foot in diameter and are spaced three feed apart. Positioned between the end plates 31 and secured in assembled relationship therewith as well as with the axle are a plurality of blades 32 which are of a generally planar construction. The specific construction of the blades 32 will be described in greater detail hereinafter, but it will be noted at this point that these blades are disposed in axially extending relationship to the axle with one edge therefrom. The number of blades 32 shown in illustrative embodiment is 8, however, it will be understood that a greater or lesser number of blades may be utilized as deemed most appropriate for processing of specific grains. The rotor being of the order of three feet in axial length and centrally disposed thus has approximately six inches end clearance with respect to the chamber's side walls.

A flow of grain into the interior of the roasting chamber is effected by the grain inlet 13. This inlet includes a receiving hopper 33 which opens at its bottom into an auger 34. This auger 34 extends transversely across the top region of the chamber with the hopper 33 being disposed adjacent one of the inner side walls. Forming the auger 34 itself, is an elongated cylindrical tube 35 with a helical blade 36 extending axially therethrough. The helical blade 36 is carried on an elongated shaft 37 that extends outwardly from each end of the tube 35 and is journalled in respective bearings 37a that are mounted on respective ones of the longitudinal frame members 28 at the top of the outer walls. The auger 34 is of a length approximating one half of the transverse width of the chamber and has a discharge opening 38 located at substantially the center of the chamber. With the auger 34 located as can be best seen in Figure 4, it will be understood that the grain in thus caused to enter into the chamber at a point which is located vertically above the rotor 12, the rotor shown in outline only for clarity of illustration,and slightly offset toward the rear of the chamber with respect to the axis of the rotor. Support of the auger at the center of the chamber is provided by an end cap 39 which receives the inner end of the tube 35 with the cap itself being mounted on a support member 40. This support member 40 is a tubular element that extends longitudinally of the chamber and in turn is carried by the transverse structural elements 18 and 18a. The hopper 33 is of a funnel shape having vertical end walls 41 and converging transverse walls 42. This location of the auger is advantageous as it enables the roasting operation to begin while the grain is moved toward the discharge opening. Use of an auger also provides a means of effecting a controllable rate of inflow as well as preventing escape of air from the chamber through the grain inlet.

Associated with the grain inlet is a distributor element 43 for effecting distribution of the incoming grain throughout the length of the rotor. This distributor element 43 comprises a L-shaped structural member which is disposed with the apex directed upwardly and each of its flanges 44 being directed downwardly and toward the sides of the chamber. It will be noted in Figure 5 that this element is located essentially in central alignment with the discharge opening 38 and will thus effect a flow of grain toward each of the opposite ends of the rotor and result in a substantially uniform distribution of the grain over the rotor.

Removal of the grain from the chamber after it is roasted is effected by the grain discharge 14. In this illustrative embodiment of the apparatus, the discharge 14, as can be best seen in Figures 6 and 7, includes an auger-type conveying mechanism 45 which extends transversely across the entire width of the roasting chamber. Forming this conveying mechanism 45 is an elongated channel 46 of circular cross-section and in which is disposed a helical blade 47 extending axially through the channel. Supporting the helical blade is an elongated shaft 48 having its outer ends extending a distance outwardly from either of the inner side walls and journalled in respective bearings 49 that are mounted on the frame members 15 of the outer walls. The channel 46 opens upwardly and each of its longitudinally extending edges is interconnected with a respective one of the inclined panels 24 and 25 forming the bottom of the roasting chamber. Accordingly, roasted grain that falls onto the panels 24 or 25 will gravitate downwardly into the channel 46 where, upon rotation of the blade 47, the grain will be transported to the one of the conveying mechanism. An opening is provided in the bottom of the channel at that end and communicates with a downwardly directed tube 50 that opens at its bottom and thus permits discharge of the roasted grain into a receiver or other transporting mechanism. A receiver 51 which may form a part of a further transporting mechanism is shown only in part in Figure 1.

In the illustrated exemplary embodiment of the apparatus, driving of the rotor 12 and operation of the grain inlet 13 and grain discharge 14 is effected by separate electric motors 52 and 53. Each of these motors is mounted on the structural framework by respective support brackets 54 and 55 and disposed at the rear of the roasting apparatus. Mechanical coupling of the motors 52 and 55 to the respective shafts 30 and 37 and 48 is effected by means of sprockets and chains along with appropriate gear-type speed reducers. With respect to the rotor 12, the motor 52 is coupled with the speed reduction unit 56 and diameters of the sprockets 57 and 59 are selected to result in capability for revolving of the rotor 12 at a velocity in the range of one revolution in one and one half to two minutes time. As will be explained, this rate of revolution of the rotor is designed to provide sufficient time to effect roasting of the grain as it is carried by the rotor. Each of the shafts 37 and 48 for the grain inlet and discharge mechanisms are also provided with chain sprockets 60 and 61, respectively. Those sprockets 60 and 61 are mechanically coupled by a common sprocket chain 62 to a drive sprocket 63 that is mounted on an output shaft of a speed reduction unit 64. This speed reduction unit 64 is coupled to the output of the electric motor 53. It will be noted that the chain sprocket 60 mounted on the inlet auger shaft 37 is relatively larger than the sprocket 61 that is mounted on the shaft 48 of the discharge auger. This results in the discharge auger being revolved at a relatively more rapid rate than the inlet auger. The objective of this difference in speed is to assure that the roasted grain will be removed at a rate which will assure that the roasted grain will be removed from the roasting chamber at a rate such that the grain will not be overheated. Suitable control apparatus is provided to permit the operator to selectively vary the speed of each of the motors 52 and 53 to obtain the optimum flow rates and roasting times for a particular grain. This control is advantageous in the the apparatus can be utilized for different grains and the different grains do require specific adjustments as to the roasting times along with the proper adjustment as to the amount of grain that is passed through the apparatus per unit time. The sprockets 60 and 61 are selected so that the discharge auger will operate at a speed of about 20 percent greater than that of the inlet auger. The inlet auger 34 is of a smaller diameter than the discharge auger 45, four inches as compared to six inches, to further assure that roasted grain will be removed at a faster rate than the raw grain in introduced. These factors assure that there will not be a build-up of roasted grain in the chamber as a build-up could lead to a fire hazard. Interconnecting of the auger drives by a common chain is advantageous in that in the event of a mechanical malfunction, grain will not continue to be introduced into the chamber unless it is also being removed.

It will also be noted that the motors 52 and 53 are mounted through their support brackets 54 and 55 on the outer of one of the longitudinal side walls. The sprockets and drive chains are also disposed at the outward side of that wall and this arrangement further minimized the effect that the heat generated within the roasting chamber may have on the bearings and drive mechanisms. In view of this exterior mounting of the drive mechanisms, safety of operation is enhanced through providing of a guard or shield 65. This shield is shown as being of a unitary construction having a side wall 66 overlying the mechanisms and spaced from the panel 20 of the side wall by respective flanges 67 to result in forming of a substantially closed case. Attachment of the shield 65 is effected by appropriate brackets and fastening devices 68 such as can be seen in Figure 6 to permit removal of the shield for maintenance of the mechanism.

The heat generator 11 is positioned at the forward side of the roasting chamber 10 and is mounted on structural frame components that are also of a tubular construction of square cross-section. The structural frame is formed as an auxiliary part of the frame structure described with respect to the roasting chamber. The base frame 15 thus extends a distance forwardly and carries upstanding vertical supports 70 and 71 on which longitudinal frame members 72 are secured in upwardly spaced relationship to the base frame. Additional longitudinal frame members 73 are provided between the vertical support 70 and the front of the roasting chamber in upwardly spaced relationship to the frame members 72. As can be best seen by reference to Figures I, 4 and 7, this structural arrangement forms a rectangular chamber that connects with an inlet opening in the front of the roasting chamber. The side walls as well as the top and bottom of this section are covered with sheet metal panels 74 and 75. Mounted substantially within the central region of this inlet section is the burner unit 76. This burner unit 76 is illustrated as being of a type generally described as a gun-type burner. Such a unit includes a burner chamber 77 of elongated cylindrical configuration and an outer cylindrical shroud 78. The burner chamber 77 is coaxially disposed and supported within the shroud 78 by support struts 79 and the shroud in turn is then supported on the structural frame by respective struts 80. A burner of this type is frequently fueled by liquid petroleum fuel products and appropriate conduits and valving mechanism are provided to effect the inflow of that fuel. In the illustrative embodiment, the fuel control and inlet elements are diagrammatically shown in Figures 1 and 2 for purposes of reference and in general comprise a fuel conduit 81 which connects with a fuel injector mechanism and flame holder disposed within the burner chamber 77 but which are not shown as such structures are known to those skilled with such mechanisms. Included in the fuel conduit 81 are basic control elements which are shown as a flow control valve 82 and a shut-off solenoid valve 83. The solenoid valve 83 includes an electric solenoid 84 which is advantageously interconnected into a control system such that the burner unit may be automatically controlled in accordance with operating parameters of the apparatus.

Airflow is induced through the burner unit 76 and the roasting chamber 10 by a blower apparatus 85. The blower apparatus 85 is not shown in any substantial detail, but it is seen in Figures 1 and 2 of the drawings to include a blower housing 86 provided with a blower unit 87. The blower housing 86 is mounted on the forward longitudinal frame member 72 and comprises a substantially closed chamber that includes internal duct 88 that directs the airflow through the burner chamber 77 as well as through the cylindrical shroud 78. Although not shown in specific detail, it can be seen that the blower unit 87 includes an inlet duct 89 that leads into the central region of a blower element 90 which may be of the squirrel cage rotor type. The blower element rotor is mounted on the output shaft of an electric drive motor 91 which s connected in circuit with appropriate speed control devices 92 which, in turn, are interconnected into an automated control system. A protective grate 93 is disposed over the outer end of the inlet duct 89. For convenience of operation, the control system may be housed within a control panel 94 that is mounted on the front wall of the blower housing 86. For convenience of maintenance, the fuel conduit 81 lead into the interior of the blower housing 86 through an access plate 95.

Airflow through the roasting chamber 10 is controlled by a flow control mechanism 96 that is mounted on the rear panel 23 of the roasting chamber. This flow control mechanism 96 comprises a rectangular opening 97 formed in the panel 23 adjacent the upper end of the chamber and a moveable valve plate which can be selectively positioned to vary the effective size of the opening through which air may escape from the chamber. This valve plate 98 is retained on the panel 23 for sliding movement with respect thereto by a pair of guide rails 99, with the positioning of the plate being controlled by means of an actuating bar 100 secured to the plate and adapted to be held within a clamping mechanism 101 attached to the panel 23.

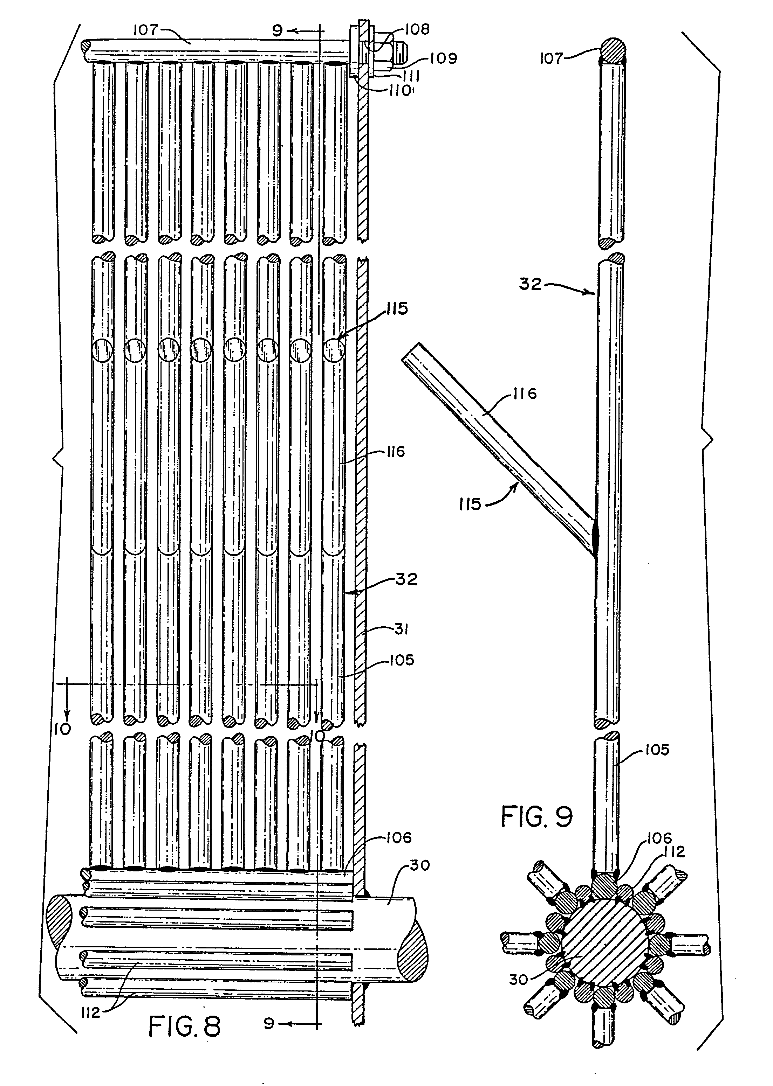

The structure of the rotor 12 had been previously described in general terms as comprising an elongated central axle 30 having circular end plates 31 mounted thereon in axially spaced relationship and carrying a number of blades 32 extending axially between the end plates in radially disposed relationship to the axle. Figures 8, 9 and 10 illustrate in greater detail the specific construction of the rotor and the elements of the rotor. To effect roasting of the grain in accordance with the method of this invention, it is particularly beneficial to construct the blades 32 to have openings therein through which heated air, and in some instances the flame from the burner, to pass through the blades and around the grain that is supported on those blades. A structure that has been found particularly advantageous comprises a plurality of circular rods 105 that are disposed in spaced parallel relationship and project radially outward from the central axle 30. These rods are advantageously formed from a steel having a relatively high carbon content and may be of the type designated as 1045 and will thus not be as susceptible to warping in this high temperature environment. These cylindrical rods in the illustrative embodiment are one fourth inch in diameter and are approximately two feet long. This results in a rotor having a diameter of the order of four feet and as previously indicated, the rotor in the illustrative structure has an axial length of the order of three feet. Each of the rods is spaced from an adjacent rod, or end plate 31, by a distance which is of the order of 3/32 inch. This spacing has been found particularly advantageous with respect tot he grains that are being processed in an apparatus of this type such as soybean and corn as the grain does not become lodged between the rods, but is supported in a manner that it will be able to readily move as by rolling or sliding along the surfaces of the rods which define the blade structure. Utilization of circular cross-section rods has also been found advantageous in that the arcuate surfaces tend to enhance the airflow through the blade as compared with rods of square cross-section.

The opposite ends of the rods 105 are welded to respective transverse rods 106 and 107 resulting in formation of a unitary structure that forms a respective one of the blades 32. The transverse rod 106 at the side of the blade disposed adjacent the axle 30 is merely positioned against that axle and is not rigidly secured to the axle. The opposite transverse rod 107 has threaded end portions which extend through apertures 108 formed in the end plates 31 at the outer periphery. These threaded end portions extend through the aperture and a nut 109 is threaded onto the rod and thus secures the blade in position on the end plate 31. An abutment 110 is welded to the rod 107 to maintain the spacing of the end plate with respect to the adjacent rod with a lock washer 111 provided to better assure maintenance of the mechanical interconnection. Welded to the central axis 30 are additional cylindrical rods 112 that extend axially along the axle between the end plates 31. These rods 112 are angularly spaced apart around the periphery of the axle a distance which will permit interpositioning of the transverse rod 106 of a respective blade 32 between adjacent pairs of rods. The inner side or ends of the blades are thus retained in fixed relationship to the axle. The circular end plates 31 may be welded to the axle 30 in fixed relationship thereto as shown in Figure 8 and assembly of the blades is accomplished by flexing the circular plates a sufficient distance outwardly to permit the outer transverse rod 107 to have its threaded ends inserted into the respective apertures 108.

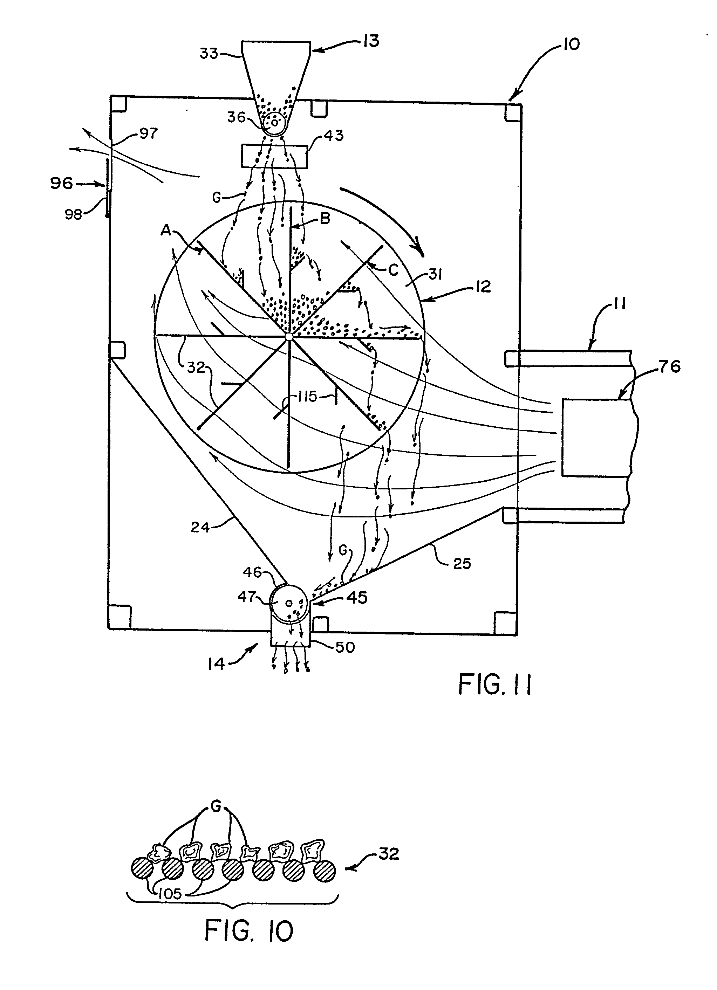

To enhance the functioning of the blades 32 in controlling the movement of grain over the blades as well as to effect the distribution of the grain, it has been found advantageous to provide each of the blades with an auxiliary blade structure 115. This auxiliary blade structure comprises relatively short lengths of cylindrical rods 116 that are also formed from the relatively high carbon 1045 steel. These rods 116 in the illustrative embodiment are of a length of the order of three inches with on of these short rods secured at one end to each of a respective one of the circular rods 106 forming a primary rotor blade. The rods of the auxiliary blade structure 115 are disposed in angled relationship to the rods of the primary blade at an angle of the order of 45 degrees and project relatively toward from the side of the blade in the direction of rotation as well as radially outward. The auxiliary blade structure 115 thus forms a V-shaped pocket in cooperation with the rods of the primary blade and will retain a quantity of the grain as will be described in conjunction with the operation of the system with respect to Figure 11.

Operation of the apparatus in performing roasting of grain in accordance with the method of this invention is best illustrated with respect to the diagrammatic representation of the apparatus as shown in Figure 11. In initiating operation, the heat generator 11 is first placed in operation to ignite the burner unit 76 and activate the blower unit 87 to cause a flow of heated air to enter the roasting chamber 10 as illustrated by the directional arrows emanating from the end of the cylindrical shroud 78. Concurrently' the motor 52 is energized to cause the rotor 12 to revolve. When initiating operation, grain is not permitted to enter the roasting chamber as it is preferred to first heat the rotor 12 to a predetermined elevated temperature such that it will be able to transmit heat to the grain in effecting the roasting of the grain. It will also be noted that the exhaust airflow control mechanism 96 on the rear wall of the roasting chamber will be adjusted to permit exit of air from the chamber at a desired rate in accordance with the heat requirements for roasting of a particular grain. This initial heating of the apparatus will continue until the rotor 12 will have been heated to a temperature in the range of 600 - 750 degrees Fahrenheit.

Once the rotor 12 has been heated to the desired temperature, the motor 53 is energized to drive the grain inlet 13 which is then operated to cause the grain to flow into the interior of the roasting chamber. Since the grain discharge 14 is mechanically coupled with the grain inlet, it will also begin operation. The grain inlet 13 moves the grain that is deposited in the hopper 33 to the discharge outlet 38 by means of the auger 34. The grain then falls by gravity onto the distributor element 43 with the grain then being deflected axially with respect to the axis of the rotor 12. From the location of the grain inlet 13, it will be seen that the grain falls onto the rotor blades 32 and auxiliary blades 115 at a position where those blades are moving in an upward direction although some grain may also fall into a region between two adjacent blades where the blades may be starting a downward rotational movement. The grain as it is deposited onto an upwardly moving blade will be collected not only onto that surface, but will accumulate in the pocket formed with the auxiliary blade as well as at the central vertex of two adjacent blades at the central axis 30. As the grain rolls along the surface of the blades, it will be heated while it is? concurrently moving. It is desirable that the grain be caused to move and roll on surfaces of the blades to avoid overheating and burning of the grain. Referring to Figure 10, it will be noted that the spacing of the rods 105 results in formation of channels or grooves into which the grain is deposited and along which the grain can then roll. Kernels of grain are illustrated in Figure 10 by the letter G and in Figure 11 the grain is similarly designated.

As a blade 32 such as the blade A (Fig. 11) shown in a position where it is moving upwardly to initially receive grain continues its rotation of movement to a vertical position, there will be some of the grain that was initially collected by the auxiliary blade element 115 moving over the edge and flowing again downwardly along the surface of the blade 32. While blade A moves to a position such as blade B, there will then be a further discharge of grain from the auxiliary blade 115 into the pocket formed by the two adjacent blades and the grain will then begin to flow along the opposite or backside of the blade which is shown at position C. Continuing rotational movement of the rotor will also continue the discharge of grain from the auxiliary blade and the grain on the backside of the blade 32 will continue to flow radially outward toward its outer end. Further rotation of the rotor as to a particular blade will then bring a blade carrying grain into a downwardly inclined position and the grain will then be completely discharged by rolling over the surface of that blade. During the time that the grain is moving on the blade elements, it is in direct contact with those blades and heat is then readily transferred to the grain to effect roasting. Concurrently, the heated air and in some cases, flame, will be flowing through the rotor and can pass through the open spaces between the rods 105 that form the respective blades.

Discharge of the grain from the rotor results in the grain then flowing onto the panel 25 which, because of its inclination, will cause the roasted grain then to flow downwardly and into the auger will cause the roasted grain then to flow downwardly and into the auger 45 of the grain discharge 14. The helical blade 47 then operating on the grain received within the auger will transport the grain to the end where it is then discharged through the tube 50.

The illustrative apparatus is capable of processing grain on a continuous basis and obtaining uniform roasting of the grain. The burner of an illustrative embodiment of the apparatus may have an output of the order of 1 million BTU with this heated air being directed into the roasting chamber against a static pressure which is dependent upon the positioning of the airflow control mechanism 96. The processing quantity capability of the apparatus is dependent in part upon the moisture content of the particular grain as well as the particular type of grain. As an example, soybeans can be processed by this apparatus at a rate of 60-80 bushel per hour where the chamber temperature is in the range of 550 - 750 degrees Fahrenheit. The grain begins cooling after it is discharged from the rotor 12 and by the time the grain is discharged, it may at a temperature range of 280 - 300 degrees Fahrenheit. Shelled corn can be processed by the illustrative apparatus at a rate of 100 - 120 bushels per hour, also with a chamber temperature in the range of 550 - 750 degrees Fahrenheit with the corn then exiting the apparatus at a temperature of 230 - 250 degrees Fahrenheit.

Specifics and structural elements of an automated control system for the apparatus have not been illustrated or described. Such controls and their interconnection are know to those skilled in this particular art and their selection and assembly can be readily effected for a particular apparatus with due consideration to the speeds of operation of the various components as well as the temperature factors.

Capacity of the apparatus for processing of grain in accordance with the method of this invention is dependent upon the volume of grain that can be moved through the roasting chamber during a specified time period. Roasting of the grain to the desired degree requires that the grain be subjected to the high temperature air and contact with the blades for a predetermined time that is sufficient to transfer the quantity of heat necessary to effect roasting of the particular grain. While the capacity of the apparatus hereinbefore described with reference to the exemplary embodiment shown in the drawings could be increased by increasing the length of the rotor, that apparent solution is not deemed practical. Increasing the length of the rotor has the direct adverse consequence of increasing its weight, thereby compounding the structural problems such as, for example, bending of the axle and blades and placing of greater strain on the bearings. Also, blades of greater axial length will tend to warp to a greater degree.

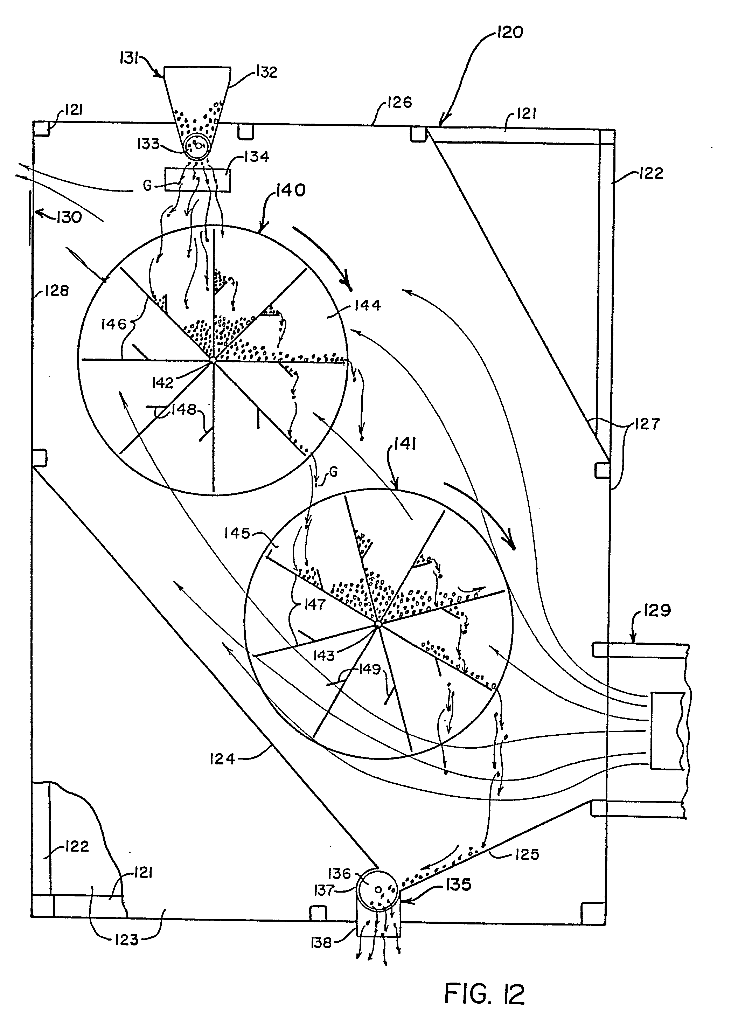

A better solution to increasing capacity of the roasting apparatus is shown in Figure 12 which is a diagrammatic, vertical sectional view of the roasting chamber 120 of a modified apparatus. This modified apparatus includes a structural frame that is fabricated in a manner that is similar to the first described embodiment having a welded structural frame comprising horizontal and vertical tubular member 121 and 122, respectively, to which which sheet metal plates 123 are applied to form the dual vertical side walls with other sheet metal plates 124, 125, 126, 127 and 128 applied to the frame members to form the inclined front and rear bottom walls, top cover and the front and rear upper walls. A heat generator 129 only partially shown but which may be of the same construction as that described with the first embodiment connects to the front of the roasting chamber adjacent the bottom with heated air and flame entering to flow rearwardly and upwardly through the chamber. A flow control mechanism 130 that may be similar to that included in the first described embodiment is provided in the upper rear wall 128. A grain inlet 131 having a receiving hopper 132 and an auger 133 that may be similar to that previously described at the top of the roasting chamber to provide a controlled rate of the inflowing grain. A distribution element 134 comprising a V-shaped member supported as previously described with respect to the Figures 4 and 5 embodiment is also provided for the same purpose of effecting distribution of the grain throughout the axial extent of the rotor underlying the auger's discharge opening located centrally between the side walls of the roasting chamber. Removal of roasted grain from the bottom of the roasting chamber is effected by a grain discharge 135 of the same general construction as that illustrated in Figures 6 and 7 and previously described. This discharge includes an auger-type conveying mechanism having an auger 136 positioned in an open-topped channel 137 and extending substantially across the full width of the roasting chamber. The upper edges of the channel 137 connect with the respective inclined panels 124 and 125 enabling the roasted grain collected on the panels to flow downwardly into the channel. A discharge device is provided at one end of the channel 137 in the form of a tube 138 opening downwardly to direct discharged grain into a receiver or further transport apparatus (not shown).

To achieve the increased capacity objective, this modified embodiment of the apparatus uses two rotors 140 and 141 that are of a same construction and dimension. these rotors may be of the same construction as that previously also similarly dimensioned. As such, each of the rotors includes a respective horizontal axle 142,143 extending transversely across the roasting chamber and journalled at opposite ends in suitable bearings (not shown) carried on structural frame members in the outer side walls. Each of the rotors is provided with circular end plates 144,145 disposed in axially spaced relationship on the respective axle and a plurality of blades 146,147. Each of the blades on each rotor is also provided with a respective auxiliary blade structure 148,149. The two rotors 140,141 are mounted in the roasting chamber 120 in alignment with each other between the chamber's side walls, but with the one rotor 140 disposed generally above and displaced a distance relatively rearward in the chamber with respect to the lowermost rotor 141. The grain inlet 131 is located relative to the upper rotor 140 to discharge grain onto the blades 146 that are revolving in an upward direction and prior to their reaching the center vertical position in essentially the same manner as described with respect to the single rotor embodiment.

The lowermost rotor 141 is relatively located to the upper rotor 140 so that its axle 143 is located a predetermined distance forwardly of the most forward segment of the arc through which the blades 146 of the upper rotor travel. Grain will begin to flow off from the blades of the upper rotor as they pass through a forwardly extending, horizontal position and fall onto the blades of the lower rotor that are revolving in an upward direction. Through appropriate horizontal positioning of the two rotors and relative angular positioning of the blades as between the two rotors, a uniform transfer of grain can be effected from the upper to the lower rotor. As the blades of the lower rotor revolve through a forwardly extending, horizontal position, grain will begin to flow off from the blades and fall onto the inclined bottom wall 125 of the chamber will all grain being discharged from a blade by the time it approaches a vertical downward position. The discharge grain then flows down the inclined bottom wall 125 and into the grain discharge 135.

Driving mechanisms (not shown) are provided for the grain inlet 131 and grain discharge 135 and for the rotors 140 and 141. These mechanisms may be substantially the same as those described with respect to the equivalent components in the first described embodiment. The drive mechanism for the two rotors 140 and 141 may advantageously comprise a single drive motor which is coupled by a single sprocket chain to each of the respective sprocket wheels carried by rotor axles. None of these components is illustrated as they are essentially shown with the single rotor apparatus and their adaptation to drive two rotors involves only changes that are known in the mechanical drive art. The two rotors 140 and 141 positioned as shown and being revolved in the same direction results in an effective elongation of the physical support for the grain and the consequent advantage of the grain having a greater effective support surface area for transfer of heat to the grain. Use of two rotors of the same size essentially doubles the available heat transfer surface so that the grain processing capacity is also essentially doubled over that of a single rotor apparatus. The two rotors are revolved at about twice the speed of a rotor in a single rotor apparatus. A further advantage of the two rotor apparatus surface at a faster rate to further reduce the likelihood of overheating or burning.

It will be readily apparent from the foregoing detailed description of the illustrative embodiment of the apparatus and its method of operation that a greatly enhanced and improved roasting operation can be effected as to various feed grains for livestock. The unique rotor utilized in the apparatus provides the necessary support for maintaining the grain within a heating environment for a sufficient time to effect proper and complete roasting of the grain. Utilization of the rotor has the further advantage in that it continuously agitates the grain that is supported thereon to enhance the uniform heating and to also avoid the possibility of certain portions of the grain becoming overheated through prolonged contact between a same surface of grain kernels with respect to heated surfaces of the rotor. Utilization of the rotor for support of the grain produces an agitation of the grain such that it is caused to move over both surfaces of a rotor blade and result in greater efficiency of heat transfer.

## Claims

1. Apparatus for roasting of grain, the apparatus comprising a roasting chamber (10) provided with a source of heated air (11) and including means for effecting a flow of heated air into and through the chamber, a rotor (12) mounted in the chamber for revolution about a horizontal axis in the flow path of the heated air, the rotor having a plurality of heat retaining blades (32) formed with openings for passage of heated air therethrough and which are each disposed in longitudinally extending relationship to the axis of rotation of the rotor and projecting a distance radially outward from the axis in angularly spaced relationship to each other forming surfaces for support of grain thereon; drive means (57, 58, 59) mechanically coupled with the rotor for effecting rotation thereof at a predetermined rate, grain inlet means (13,34) disposed in cooperative relationship with the roasting chamber and operable to effect feeding of grain onto the rotor blades, and grain removal means (45) disposed in operative relationship with the roasting chamber for receiving roasted grain therefrom and operable to remove the roasted grain received therefrom.

2. Apparatus according to claim l, wherein the rotor (12) is mounted in the chamber (10) entirely in the flow path of the heated air, the blades (31,115) being arranged to support grain thereon during a portion of each revolution of the rotor, each of the rotor blade being formed from a heat absorbing and retaining material, and the blade openings being arranged for passage of heated air therethrough during at least that portion of each rotor revolution when the respective blade is not supporting grain whereby the blades absorb heat and will be heated to an elevated temperature.

3. Apparatus according to claim 1 or claim 2, wherein each of the rotor blades (32) carries at least one auxiliary blade (115) that extends axially of the rotor, each of the auxiliary blades being carried by a respective one of the rotor blades on the side thereof facing in the direction of rotation and disposed at a point intermediate the rotor axis (30) and the rotor blade's outer axially extending edge, each of the auxiliary blades projecting a distance laterally outward with respect to the rotor blade upon which it is carried to retain a quantity of grain in cooperation with the primary blade.

4. Apparatus according to claim 3,wherein each of the auxiliary blades (115) is disposed in angularly divergent relationship at an acute angle to the rotor blade (32) on which it is carried forming therewith a pocket that opens in a radially outward direction.

5. Apparatus according to claim 4, whrein the auxiliary blade (115) is disposed at an angle of the order of 45 degrees with respect to the rotor blade (32).

6. Apparatus according to any one of claims 3 to 5, wherein each of the rotor (32) and auxiliary blades (115) is of a planar configuration.

7. Apparatus according to any one of the preceding claims, wherein each of the rotor blades (31) comprises a plurality of elongate rods (105) disposed in spaced parallel relationship to each other and extending radially outward from the axis (30) of the rotor, adjacent ones of the rods being spaced apart a distance that is less than the nominal diametrical dimension of the grain to be supported thereon.

8. Apparatus according to claim 7 wherein the rods (105) are of circular cross-section.

9. Apparatus according to claim 8, wherein the rods (105) are of a diameter of the order of 1/4 inch and are spaced apart from each other a distance of the order of 3/32 inch.

10. Apparatus according to any one of the claims 7 to 9, when dependent on any one of the preceding claims 3 to 6, wherein each of the auxiliary blades (115) comprises a plurality of elongate rods with each one of the rods of the auxiliary blade secured to a respective one of the rods (105) of the rotor blade.

11. Apparatus according to claim 10, wherein the rods (105) of the auxiliary blades are of circular cross-section.

12. Apparatus according to claim 2, wherein both surfaces of the rotor blades (31) are formed with a plurality of elongate, radially extending, rib-like conformations disposed in spaced relationship defining grain-receiving channels between adjacent pairs of the rib-like conformations, the rib-like conformations being spaced apart a distance to receive the grain on adjacent pairs and to retain the grain for movement therealong.

13. Apparatus according to any one of the preceding claims, wherein the rotor (12) includes radially disposed end plates (31) positioned one at each end of the rotor blades to prevent grain from flowing axially off the blades.

14. Apparatus according to any one of the preceding claims, wherein the grain inlet means (13,34) includes a grain discharge (38) disposed a distance vertically above the rotor and a predetermined distance laterally offset with respect to a vertical plane passing through the axis of rotation in a direction to primarily overlie only those rotor blades (32) revolving in an upward direction to thereby deposit grain primarily on the surface facing in the direction of rotation.

15. Apparatus according to claim 14, wherein the grain inlet means includes grain distribution means (43) disposed in the path of grain flowing downwardly from the discharge to effect substantially uniform distribution of grain throughout the entire axial length of the rotor blades.

16. Apparatus according to any one of the preceding claims, wherein the grain removal means (45) includes a collector surface (46) disposed in underlying relationship to the rotor to collect the grain as it falls downwardly upon discharge from the rotor and grain conveying means (47) to transport grain collected on the collector surface to a point exterior of the roasting chamber.

17. Apparatus according to claim 16, wherein the collector surface (46) is inclined downwardly in a direction toward the grain conveying means to cause collected grain to flow toward the grain conveying means.

18. Apparatus according to any one of the preceding claims, having a plurality of the rotors (140, 141) mounted is the chamber for rotation about spaced horizontal axes (142, 143) in the flow path of the heated, the rotors being disposed in spaced parallel relationship to each other with reference to vertical and horizontal planes passing through their respective axes whereby grain discharged from an uppermost one of the rotors is received by a next successive one of the rotors, and the drive means being mechanically coupled with each of the rotors for effecting rotation of each rotor at a predetermined rate.

19. Apparatus according to any one of claims 1 to 17, which includes a second rotor (141) mounted in the chamber for rotation about a horizontal axis (143) in the flow path of the heated air and coupled with the drive means for effecting rotation thereof at a predetermined rate, the second rotor (41) having a plurality of blades (147) which are each disposed in longitudinally extending relationship to the axis of rotation of the second rotor and projecting a distance radially outward from the second rotor's axis in angularly spaced relationship to each other forming surfaces for support of grain thereon, the second rotor being disposed in underlying relationship to the first mentioned rotor (140) with the axis of the second rotor laterally offset a predetermined distance with respect to a vertical plane passing through the axis (142) of the first mentioned motor for directly receiving of grain discharged from and falling from the first mentioned rotor.

20. Apparatus according to claim 18 or claim 19, wherein each of the rotors is rotated in the same direction.

21. A method of roasting grain, the method comprising the steps of heating a grain supporting plate (32) formed with openings to a predetermined elevated temperature by passing a stream of heated air therethrough, distributing a quantity of grain onto the heated grain supporting plate, moving the grain supporting plate (32) to cause displacement of the grain thereover in a manner to cause the grain to roll or other wise turn to change the surface of the grain that is in contact with the supporting plate, passing the grain supporting plate through a stream of heated air at a rate to maintain the grain on the surface and in the heated air stream for a time sufficient to effect roasting thereof and thereafter discharging the grain from the supporting plate, and collecting the roasted grain discharged from the supporting surface.

FIG. I

FIG. 4

FIG. 5

FIG. 6

FIG. 7

FIG. 8

FIG. 9

FIG. 11

FIG. 10

FIG. 12

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 680 472 (SKELTON et al.)<br>* Column 1, line 1 - column 4, line 34; column 5, lines 10-28 in particular column 3, lines 31,32,56,57 * | 1,21 | A 23 N 12/10<br>F 26 B 7/00 |
| A | US-A-3 368 475 (TRUAX)<br>* Figures 3,4 * | 1,21 | |
| A | FR-A- 533 254 (CORNAILLE et al.)<br>* Page 3, lines 72-89; page 4, lines 24-31; page 2, lines 80-92 * | 1,21 | |
| X | DE-C- 242 512 (HAFERUNG)<br>* Page 1, line 1 - page 2, line 55 * | 1,13-21 | |
| X | GB-A- 299 134 (TURNER)<br>* Page 2, line 1 - page 3, line 62 * | 1,13,14 ,21 | |
| X | US-A-2 063 446 (LANZI et al.)<br>* Page 2, line 36 - page 3, line 46 * | 1,21 | |
| A | CH-A- 109 935 (SCRIVE)<br>* Page 1, line 1 - page 3, column 2, line 25 * | 1-3,6, 13,16, 17,21 | **TECHNICAL FIELDS SEARCHED (Int. Cl.4)**<br><br>A 23 N<br>F 26 B |
| A | DE-B-1 009 005 (RÜTER)<br>* Column 1, line 1 - column 2, line 32; column 9, line 45 - column 10, line 14; claim 1 * | 1,21 | A 23 B |

The present search report has been drawn up for all claims

| Place of search | Date of completion of the search | Examiner |
|---|---|---|
| THE HAGUE | 29-08-1988 | VAN OORSCHOT J.W.M. |